# FASCICULE DE BREVET EUROPEEN

(11) **EP 1 406 838 B1**
(45) Date de publication et mention de la délivrance du brevet: **09.09.2015**
(21) Numéro de dépôt: 02743265.7
(22) Date de dépôt: 02.07.2002
(51) Int. Cl.: C01F 11/18, C08K 3/26

(54) **PROCEDE POUR L'OBTENTION DE PARTICULES DE CARBONATE DE CALCIUM PRECIPITE STRUCTUREES A L'ECHELLE NANOMETRIQUE**
VERFAHREN ZUR HERSTELLUNG VON PRÄZIPTIERTEN CALCIUMKARBONATTEILCHEN MIT NANOMETERSTRUKTUR
METHOD FOR OBTAINING PRECIPITATED CALCIUM CARBONATE PARTICLES OF NANOMETRIC SCALE STRUCTURE

(30) Priorité: 04.07.2001 FR 0108909
(43) Date de publication de la demande: 14.04.2004
(73) Titulaire: SOLVAY SA, 1120 Bruxelles (BE)
(72) Inventeur: VOGELS, Claude, B-1380 Lasne (BE); CAVALIER, Karine, F-13200 Arles (FR); SY, Didier, F-13129 Salin de Giraud (FR); ROSA, Roberto, I-21020 Ranco (IT)
(74) Mandataire: Vande Gucht, Anne
(86) Numéro de dépôt international: PCT/EP2002/007490
(87) Numéro de publication internationale: WO 2003/004414

(56) Documents cités:
- EP-A- 0 468 719
- EP-A- 0 844 213
- WO-A-00/03949
- WO-A-99/51691
- US-A- 4 157 379
- US-A- 5 741 471
- US-A- 5 750 086
- US-B1- 6 221 146
- PATENT ABSTRACTS OF JAPAN vol. 008, no. 212 (C-244), 27 septembre 1984 (1984-09-27) & JP 59 097530 A (KOUNOSHIMA KAGAKU KOGYO KK), 5 juin 1984 (1984-06-05)
- DATABASE WPI Section Ch, Week 198529 Derwent Publications Ltd., London, GB; Class A60, AN 1985-174454 XP002188683 & JP 60 103025 A (SHIRAISHI CHUO KENKYUSHO KK), 7 juin 1985 (1985-06-07)

## Description

La présente invention concerne des particules de carbonate de calcium précipité structurées à l'échelle nanométrique, un procédé pour l'obtention de particules de carbonate de calcium précipité structurées à l'échelle nanométrique, et leur utilisation.

Les particules de carbonate de calcium précipité par carbonatation de lait de chaux, grâce à leur grande pureté, conviennent bien comme matière de charge, notamment dans les papiers et les matières plastiques. Ces applications requièrent également des particules très fines.

Il est connu (WO 99/51691) de produire du carbonate de calcium calcitique précipité par carbonatation de lait de chaux en présence de composés organiques solubles tels que de l'acide citrique, en très faible concentration, de l'ordre de 0.1 %. Cependant, les particules de calcite obtenues sont trop grosses pour être utilisées efficacement comme matière de charge dans les matières plastiques.

Dans le brevet US 4157379 on décrit des particules fibreuses, structurées à l'échelle nanométrique, de carbonate de calcium précipité constituées de l'agglomération en chaîne de corpuscules primaires ayant un diamètre moyen compris entre 10 et 100mn.

JP60103025 (XP-002188683) décrit la formation de CaCO₃ très fin ayant une certaine surface spécifique, par la carbonatation de lait de chaux en présence d'agents qui forment des noyaux de cristal, par exemple l'acide acétique.

JP59097530 décrit la formation de CaCO₃ par la carbonatation de lait de chaux en présence d'agents gélifiants, par example l'acide tartronique.

Le brevet US5741471 révèle un procédé pour la précipitation de particules discrètes prismatiques de CaCO₃ par carbonatation de lait de chaux contenant un saccharide ou polysaccharide.

Toutefois, ces particules nécessitent une carbonatation complexe en deux étapes du lait de chaux ; dans la première on ajoute un agent chélatant au lait de chaux pour former une suspension colloïdale ; cette dernière est ensuite carbonatée en présence d'un autre additif, un sel métallique soluble, le tout sous pH contrôlé.

La présente invention vise à obtenir de manière simple, en une seule étape, des particules de carbonate de calcium précipité ayant une structure nanométrique. La présente invention vise également à produire de telles particules possédant en outre des morphologies particulières.

En conséquence, l'invention concerne des particules de carbonate de calcium précipité structurées à l'échelle nanométrique, caractérisées en ce que les particules sont constituées de nanofibres associées en fagots.

L'invention concerne aussi un procédé pour l'obtention des particules de carbonate de calcium précipité structurées à l'échelle nanométrique, caractérisées en ce que les particules sont constituées de nanofibres associées en fagots, par carbonatation de lait de chaux à une température n'excédant pas 30°C, caractérisé en ce que la carbonatation est effectuée en présence d'un contrôleur de cristallisation sélectionné parmi l'acide citrique dans une concentration comprise entre 5 et 15% et/ou un de ses sels, l'acide polyacrylique et/ou un de ses sels de poids moléculaire compris entre 500 et 15000, et l'acide polyaspartique et/ou un de ses sels.

Donc, le procédé est caractérisé en ce que la carbonatation est effectuée en présence d'un contrôleur de cristallisation sélectionné parmi la liste suivante : l'acide citrique dans une concentration comprise entre 5 et 15%, l'acide polyacrylique de le poids moléculaire compris entre 500 et 15000 et l'acide polyaspartique.

Par particule, on entend une entité physiquement et chimiquement autonome. Selon l'invention, les particules sont structurées à l'échelle nanométrique. Cela signifie qu'elles sont constituées d'un ou plusieurs éléments distincts, apparents à l'échelle nanométrique, possédant une dimension caractéristique à cette échelle nanométrique. En particulier, cette dimension caractéristique est, en moyenne, inférieure à 100nm. De manière particulièrement préférée, elle est en moyenne comprise entre 1 et 50nm. Lorsque la particule structurée à l'échelle nanométrique comprend plusieurs éléments, ceux ci sont associés pour former un tout solidaire. Ces éléments constitutifs sont des nanofibres. Dans le cas des nanofibres, la dimension caractéristique est leur diamètre.

Dans le procédé, objet de l'invention, on procède à la carbonatation de lait de chaux. A cette fin, la concentration du lait de chaux peut valoir de 3 à 200g/l d'hydroxyde de calcium. Avantageusement, cette concentration vaut au moins 25g/l. On recommande qu'elle n'excède pas 75g/l. Au moment de sa carbonatation, le lait de chaux peut avoir des températures variant de 0 à 30°C. On préfère que la température ne soit pas inférieure à 5°C. La carbonatation du lait de chaux se fait par réaction de ce dernier avec du gaz carbonique. Du gaz carbonique possédant une concentration en dioxyde de carbone variant de 3 à 100% a pu être utilisé avec succès. Toutefois, on préfère utiliser du gaz carbonique dont la concentration est comprise entre 10 et 60%. La concentration est avantageusement d'au moins 25%. On préfère plus particulièrement qu'elle ne dépasse pas 30%.

Selon l'invention, les particules de carbonate de calcium, qui sont de préférence sous forme de calcite, sont obtenues par carbonatation de lait de chaux en présence d'un contrôleur de cristallisation sélectionné parmi l'acide citrique dans une concentration comprise entre 5 et 15% et/ou un de ses sels, l'acide polyacrylique et/ou un de ses sels de poids moléculaire compris entre 500 et 15000, et l'acide polyaspartique et/ou un de ses sels. L'expression « contrôleur de cristallisation » est entendue au sens fonctionnel large. En effet, la fonction du contrôleur de cristallisation est de modifier l'interaction entre les phases solide, liquide et gazeuse en présence, lors de la nucléation et/ou de la croissance des germes cristallins de carbonate de calcium, de manière à contrôler la morphologie cristalline obtenue.

Un nombre important de substances sont réputées posséder de telles propriétés, à des niveaux d'intensité divers. Toutefois, on a observé que certaines d'entre elles, en nombre très limité, lorsqu'elles sont introduites dans le lait de chaux, provoquent l'apparition de carbonate de calcium structuré à l'échelle nanométrique de manière simple et reproductible. Sans vouloir être lié par une explication théorique, l'inventeur pense que ces additifs particuliers ont une double action : action chimique et action structurante. L'action chimique a lieu avant la réaction de carbonatation et l'action structurante pendant la réaction de carbonatation. En effet les additifs peuvent aussi bien modifier le milieu pré-réactionnel (modification du pH, de la concentration en ions Ca2+ dans le milieu, de la sursaturation, ...), que jouer leur rôle en cours de réaction. Certains contrôleurs de cristallisation organiques, grâce à leur structure macromoléculaire, peuvent modifier la nucléation et/ou ralentir la croissance de certaines faces cristallines du carbonate de calcium. D'autre part, certains additifs contrôleurs de cristallisation organiques favorisent également l'association de germes cristallins nanométriques pour former des structures organisées. Enfin ces additifs peuvent modifier la structure des cristaux de Ca(OH)₂ en suspension, qui servent alors de promoteurs aux particules structurées à l'échelle nanométrique, objet de l'invention.

On a observé que, de manière générale, pour obtenir les particules de carbonate de calcium structurées à l'échelle nanométrique selon l'invention, la carbonatation du lait de chaux est avantageusement réalisée en présence de quantités substantielles de contrôleur de cristallisation. Il est apparu que les concentrations optimum en contrôleur de cristallisation dépendent de la concentration du lait de chaux. En général, des concentrations en additif supérieures à 1% sont recommandées. Les pourcentages sont mesurés par rapport au poids de carbonate de calcium produit. Ils peuvent être facilement convertis relativement au poids d'hydroxyde de calcium initialement en solution en utilisant les règles de stoechiométrie. On préfère des concentrations d'au moins 2%. Il est sans intérêt supplémentaire que la concentration dépasse 20%. L'acide citrique est présente dans une concentration comprise entre 5 et 15%

Le produit obtenu à l'issue de la carbonatation du lait de chaux doit être séché. Le séchage peut par exemple être réalisé en étuve, par pulvérisation dans un courant d'air chaud (« spray drying ») ou par l'action de rayonnement, par exemple infrarouge (« épiradiateur »).

Dans certains cas, il peut être avantageux que les particules structurées à l'échelle nanométrique soient enrobées par une couche de matière organique. Cela peut être le cas lorsque ces particules sont utilisées comme charge, notamment dans des matières plastiques. La couche de matière organique enrobante peut être constituée, par exemple, d'acides gras, saturés ou insaturés, la longueur de la chaîne carbonée pouvant varier de 2 à 22 atomes de carbone, des acides gras dont les chaînes comprennent de 16 à 18 atomes de carbone étant préférés. La couche enrobante peut aussi être constituée d'alkylsulfosuccinates, notamment de dioctylsulfosuccinate de sodium. Enfin, et toujours à titre d'exemple, on a également obtenu des résultats intéressants lorsque la couche enrobante est de l'acide aminocaproique.

Selon l'invention, le contrôleur de cristallisation est sélectionné parmi : l'acide citrique, l'acide polyacrylique et l'acide polyaspartique.

Dans une première variante d'exécution de l'invention, le contrôleur de cristallisation est de l'acide citrique. L'acide citrique peut selon les cas être partiellement estérifié ou se présenter sous la forme de citrate ou de phosphocitrate. L'acide citrique est néanmoins préféré. Il peut être introduit avant ou pendant l'étape de précipitation. On a observé que les particules de carbonate de calcium structurées à l'échelle nanométrique sont obtenues lorsque l'acide citrique est introduit en concentration comprise entre 5 et 15%, les pourcentages étant calculés relativement au poids de carbonate de calcium obtenu. De manière préférée cette concentration est supérieure à 7%. Il est particulièrement préféré qu'elle reste en deçà de 12%.

On a également observé que, dans cette première variante d'exécution de l'invention, des températures de carbonatation basses sont préférables. Dans un mode de réalisation préféré de cette variante, les températures de début de carbonatation ne dépassent pas 10°C. Il est toutefois préférable de ne pas descendre en dessous de 4°C. Les températures entre 5 et 8°C sont particulièrement préférées. Il est à noter que, selon les dispositifs utilisés, les températures de fin de carbonatation peuvent différer de manière plus ou moins importante des températures de début de carbonatation.

Il est aussi apparu que les particules structurées à l'échelle nanométrique selon cette première variante de l'invention peuvent avoir une surface spécifique très élevée. Dans un mode d'exécution préféré de cette variante, les particules structurées à l'échelle nanométrique ont une surface spécifique supérieure à 70m²/g. Les surfaces spécifiques sont mesurées par la technique BET, décrite dans la norme ISO 9277. Dans ce mode d'exécution, on recommande que le séchage soit effectué par rayonnement, par exemple infrarouge.

Dans une seconde variante d'exécution de l'invention, le contrôleur de cristallisation est de l'acide polyacrylique. L'acide polyacrylique peut aussi se présenter sous la forme de sel, par exemple de sel de sodium. Conformément à l'invention, il est apparu que le poids moléculaire du polyacrylate de sodium est critique et est compris entre 500 et 15000. De manière préférée, ce poids moléculaire est compris entre 700 et 4000. Il est particulièrement préféré qu'il soit inférieur à 2000. Des valeurs supérieures à 1000 sont également apparues les plus préférées.

Dans cette variante d'exécution selon laquelle le contrôleur de cristallisation est de l'acide polyacrylique, il est avantageux que la température de début de carbonatation soit supérieure à 10°C. Préférentiellement, elle est supérieure à 14°C. Il est toutefois recommandé de ne pas dépasser 25°C. Des valeurs comprises entre 15 et 20°C sont les plus avantageuses. D'autre part, on préfère que la concentration du lait de chaux en polyacrylate de sodium soit supérieure à 1 %. Il est souhaitable que la concentration reste en deçà de 10%. Des valeurs de concentration variant de 2 à 5% sont plus préférées.

Dans une dernière variante d'exécution de l'invention, qui est avantageuse, le contrôleur de cristallisation est de l'acide polyaspartique. L'acide polyaspartique se présente avantageusement sous forme de sel, notamment de sel de sodium de l'acide polyaspartique. Selon cette variante, qui est préférée, des concentrations de lait de chaux en acide polyaspartique supérieures à 1 % peuvent suffire. Il est souhaitable que cette concentration ne dépasse pas 5%. De manière avantageuse, elle vaut au moins 2%. On préfère qu'elle ne dépasse pas 4%. La température de début de carbonatation est avantageusement supérieure à 10°C. Préférentiellement, elle est supérieure à 14°C. Des valeurs supérieures à 20°C sont cependant à éviter.

L'invention concerne également les particules de carbonate de calcium obtenues par le procédé selon l'invention.

Les particules de carbonate de calcium précipité structurées à l'échelle nanométrique obtenues par le procédé selon l'invention sont constituées d'au moins une nanofibre.

Une nanofibre est une entité allongée, dont le diamètre est à l'échelle nanométrique, de préférence inférieur à 50 nm. Il reste néanmoins avantageusement supérieur à 1 nm. La longueur de la nanofibre est telle que le rapport longueur/diamètre dépasse 5. Des rapports longueur/diamètre supérieurs à 100 sont rares. On préfère qu'ils restent inférieurs à 20. Dans certains cas, les nanofibres sont rectilignes. Cependant, celles ayant un rapport longueur/diamètre important sont fréquemment courbées.

Sans vouloir être lié par une explication théorique, l'inventeur pense que les nanofibres résultent de la juxtaposition bout à bout de petits grains similaires, approximativement sphériques, ayant un diamètre proche de celui de la nanofibre.

Dans certaines conditions expérimentales, les petits grains perdent leur individualité, pour former une nanofibre qui apparaît homogène et régulière, par exemple sur des clichés de microscopie électronique, quel qu'en soit le grossissement. Dans d'autres conditions expérimentales, les petits grains gardent leur individualité et restent visibles, par exemple sur des clichés de microscopie électronique. La nanofibre a alors l'aspect d'un « nanochapelet ».

Dans une variante de ce mode de réalisation de l'invention, la structure nanofibre est du type nanochapelet.

Des nanochapelets ayant un diamètre compris entre 10 et 30 nm et une longueur comprise entre 350 et 750nm sont avantageux.

On a observé que les nanofibres selon l'invention, qu'elles soient ou non du type nanochapelets, peuvent s'associer parallèlement les unes aux autres, d'une manière organisée surprenante. La structure formée ressemble alors a un « fagot » de nanofibres, tel que décrit ci-après.

Les fagots sont composés en général de plusieurs dizaines de nanofibres similaires. Ce nombre est de préférence supérieur à 100. Des fagots contenant plus de 10.000 nanofibres sont exceptionnels.

Le diamètre des fagots, qui dépend évidemment du nombre de nanofibres qu'il contient, est de préférence supérieur à 50nm. Des fagots ayant un diamètre compris entre 100 et 500 nm sont avantageux. La longueur des fagots dépend de la longueur des nanofibres dont ils sont constitués mais aussi de la manière selon laquelle elles sont associées : dans certains cas, la longueur du fagot peut être proche de celle des nanofibres. En général pourtant, certaines nanofibres dépassent les autres et la longueur du fagot est supérieure à celle des fibres. Des fagots dont la longueur est comprise entre 500 et 1500 nm sont préférés.

Pour obtenir des particules de carbonate de calcium précipité, structurées à l'échelle nanométrique et constituées de nanofibres organisées en fagots, on peut procéder notamment selon le procédé susmentionné. Dans ce cas, il est avantageux de procéder par carbonatation de lait de chaux en présence d'un contrôleur de cristallisation sélectionné parmi l'acide polyaspartique, l'acide citrique ou l'acide polyacrylique.

L'acide polyacrylique est préféré.

Lorsque le contrôleur de cristallisation est de l'acide polyacrylique, il est recommandé d'augmenter la concentration en acide polyacrylique lorsque la concentration du lait de chaux en hydroxyde de calcium est plus élevée. On a également observé que l'utilisation de l'acide polyacrylique provoque l'apparition de fagots ayant un diamètre plus important que ceux obtenus avec d'autres additifs.

Les particules structurées à l'échelle nanométrique selon l'invention sont avantageusement utilisées comme matière de charge, par exemple dans du papier ou de la matière plastique.

Dans une variante préférée, les particules de carbonate de calcium précipité structurées à l'échelle nanométrique conformes à l'invention sont utilisées comme charge dans de la matière plastique.

Dans cette utilisation, les particules structurées à l'échelle nanométrique améliorent les propriétés mécaniques de la matière plastique. Leur structure nanométrique leur confère en effet un excellent couplage avec la matrice polymérique. Elles peuvent aussi améliorer les propriétés barrière de la matière plastique à divers fluides, liquides ou gaz, grâce à leur surface spécifique très élevée qui exerce un effet d'écran au fluide que l'on désire contenir.
Les figures 1 et 2 sont des clichés de microscopie électronique qui illustrent à titre d'exemple des structures « nanofibre ». Leurs facteurs de grossissement valent respectivement 100.000 et 70.000.
La figure 3 est un cliché de microscopie électronique qui illustre un exemple de structure « nanochapelet ». Son facteur de grossissement vaut 70.000.
Les figures 4 et 5 sont des clichés de microscopie électronique qui illustrent à titre d'exemple la même structure « fagot », à des grossissements différents. Leur facteur de grossissement vaut respectivement 40.000 et 100.000.
La figure 6 est un cliché de microscopie électronique qui illustre un exemple de structure « accordéon de nanoplaques » (non conforme à l'invention). Son facteur de grossissement vaut 40.000.
La figure 7 est un cliché de microscopie électronique qui illustre des particules de carbonate de calcium précipité non conformes à l'invention, qui ne possèdent pas de structure à l'échelle nanométrique. Son facteur de grossissement vaut 10.000

La description qui suit des exemples présentés à l'appui de l'invention illustre la variété de structures nanométriques qui peuvent être obtenues par un contrôle strict des conditions de carbonatation.

### Exemple 1 (conforme à l'invention)

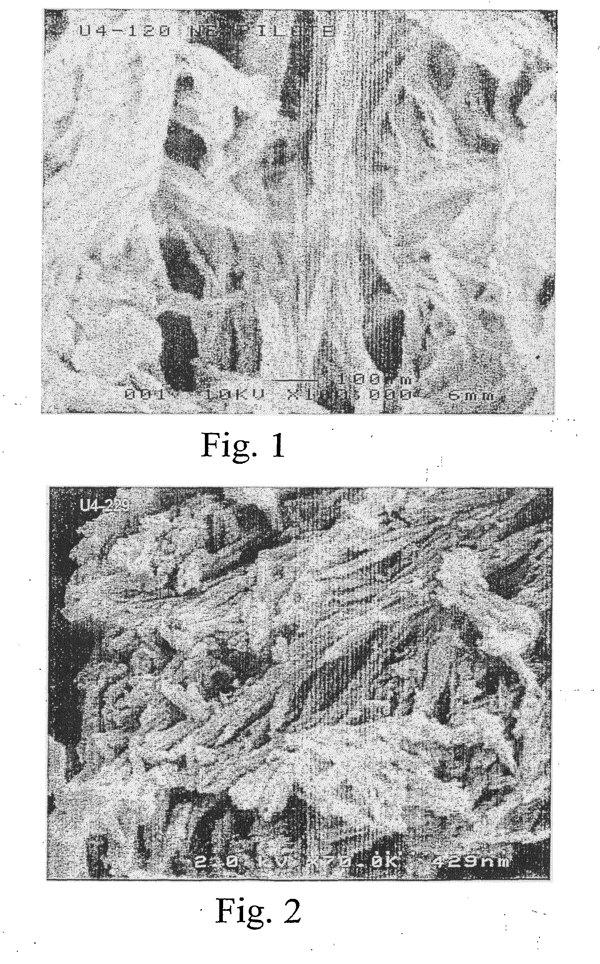

Du lait de chaux dont la concentration, exprimée en g/l de CaCO₃, est de 31, et la température initiale vaut 7,4°C, a été carbonate par du CO₂ dont la concentration vaut 28% et le débit 16m³/h, en présence de 8% (pourcentage relatif au CaCO₃ produit) d'acide citrique. La température en fin de carbonatation s'est élevée à 11,1°C. Le carbonate de calcium précipité a ensuite été séché en étuve à 75°C. Le produit obtenu, représenté à la figure 1 s'est avéré structuré à l'échelle nanométrique et constitué de nanofibres ayant un diamètre variant en moyenne entre 10 et 40 nm. La surface spécifique BET du produit a été mesurée à 22 m²/g.

### Exemple 2 (conforme à l'invention)

On a procédé comme à l'exemple 1, sauf que le carbonate de calcium précipité a été séché par la technique de l'« épiradiateur » à 70°C. La surface spécifique du produit s'est avérée atteindre 98m²/g. Le produit est illustré sur le cliché de microscopie électronique de la figure 2.

### Exemple 3 (non conforme à l'invention)

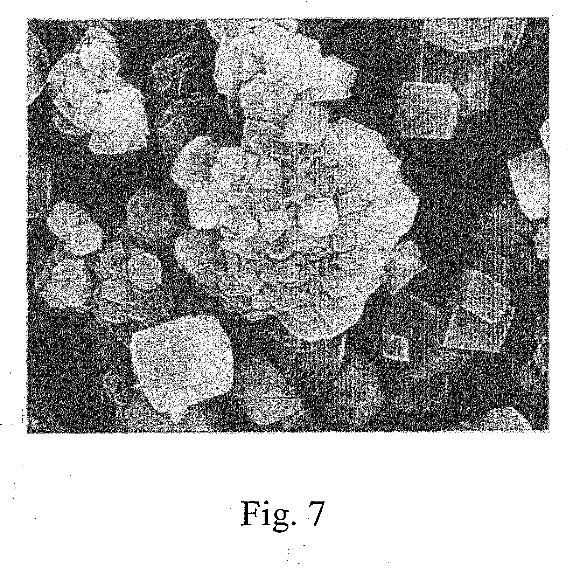

On a procédé comme à l'exemple 1 sauf que la température de début de carbonatation était de 3,8°C et la concentration du lait de chaux valait 26g/l. Le carbonate de calcium précipité obtenu, illustré sur le cliché de la figure 7, n'était pas structuré à l'échelle nanométrique.

### Exemple 4 (conforme à l'invention)

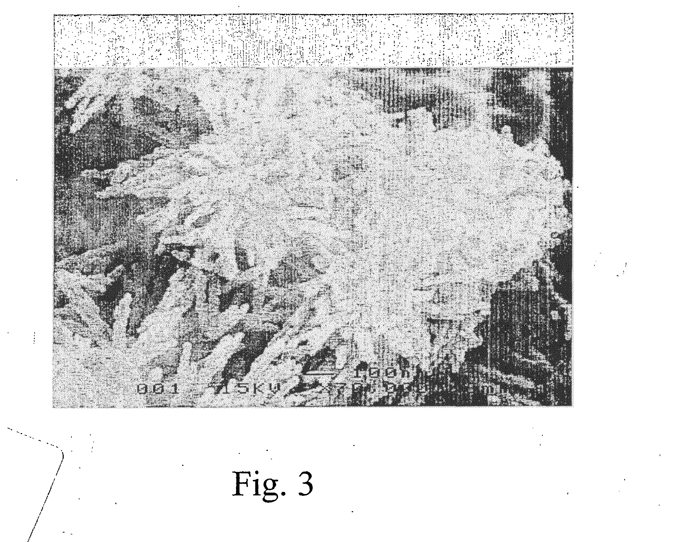

Du lait de chaux dont la concentration, exprimée en g/l de CaCO₃, est de 35, et la température initiale vaut 16,1 °C, a été carbonate par du CO₂ dont la concentration vaut 28% et le débit 16m³/h, en présence de 2% (pourcentage relatif au CaCO₃ produit) de polyacrylate de sodium. La température en fin de carbonatation s'est élevée à 16,9°C. Le carbonate de calcium précipité a ensuite été séché en étuve à 75°C. Le produit obtenu, qui a été enrobé par du dioctylsulfosuccinate de sodium est représenté à la figure 3. Il s'est avéré structuré à l'échelle nanométrique et constitué de nanochapelets, ayant un diamètre variant en moyenne entre 20 et 50 nm. La surface spécifique BET du produit a été mesurée à 50 m²/g.

### Exemple 5 (conforme à l'invention)

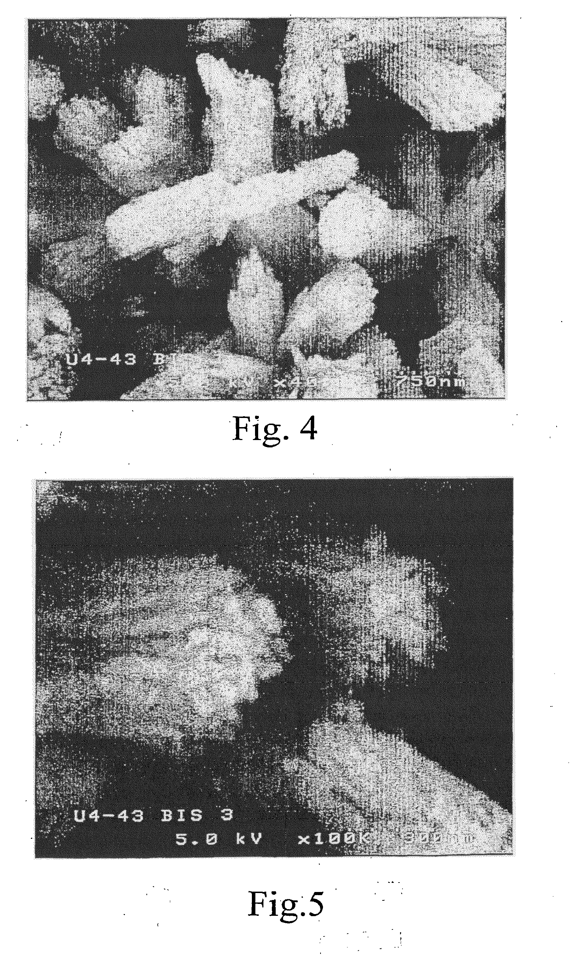

Du lait de chaux dont la concentration, exprimée en g/l de CaCO₃, est de 25, et la température initiale vaut 15,8°C, a été carbonaté par du CO2 dont la concentration vaut 28% et le débit 16m³/h, en présence de 2% (pourcentage relatif au CaCO₃ produit) de polyacrylate de sodium. La température en fin de carbonatation s'est élevée à 18,2°C. Le carbonate de calcium précipité a ensuite été séché en étuve à 75°C. Le produit obtenu, représenté aux figures 4 et 5, s'est avéré structuré à l'échelle nanométrique et constitué de nanofibres associées en fagot. La surface spécifique a été mesurée à 37m² /g.

### Exemple 6 (non conforme à l'invention)

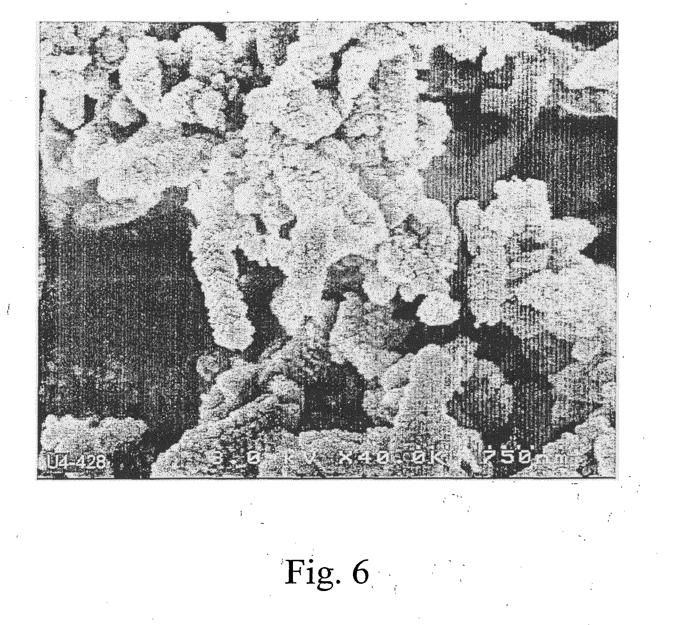

Du lait de chaux dont la concentration, exprimée en g/l de CaCO₃, est de 25, et la température initiale vaut 15,9°C, a été carbonaté par du CO₂ dont la concentration vaut 28%. Le débit de CO₂ a été réglé à 25m3/h pendant 5 minutes, puis a été réduit à 5m3/h. La carbonatation a été effectuée en présence de 10% (pourcentage relatif au CaCO₃ produit) de dioctylsulfosuccinate de sodium. La température en fin de carbonatation s'est élevée à 17,7°C. Le carbonate de calcium précipité a ensuite été séché en étuve à 75°C. Le produit obtenu, représenté à la figure 6 s'est avéré structuré à l'échelle nanométrique et constitué de nanoplaques associées en accordéons. L'épaisseur des nanoplaques est comprise entre 10 et 40 mn. La surface spécifique BET du produit a été mesurée à 9 m²/g.

## Revendications

1. Particules de carbonate de calcium précipité structurées à l'échelle nanométrique, **caractérisées en ce que** les particules sont constituées de nanofibres associées en fagots.

2. Particules selon la revendication 1, **caractérisées en ce qu'**au moins une des nanofibres est du type nanochapelet.

3. Particules selon l'une quelconque des revendications 1 ou 2, **caractérisées en ce que** les fagots sont constitués de nanofibres ayant un rapport L/d supérieur à 5.

4. Particules selon l'une quelconque des revendications 1 à 3, **caractérisées en ce que** les fagots sont composés de plus de 100 nanofibres similaires.

5. Particules selon l'une quelconque des revendications 1 à 4, **caractérisées en ce que** les fagots ont un diamètre supérieur à 50 nm, de préférence entre 100 et 500 nm.

6. Particules selon l'une quelconque des revendications 1 à 5, **caractérisées en ce que** les fagots ont une longueur comprise entre 500 et 1500 nm.

7. Procédé pour l'obtention de particules de carbonate de calcium selon l'une quelconque des revendications 1 à 6, par carbonatation de lait de chaux à une température n'excédant pas 30°C, **caractérisé en ce que** la carbonatation est effectuée en présence d'un contrôleur de cristallisation sélectionné parmi l'acide citrique dans une concentration comprise entre 5 et 15 %, et/ou un de ses sels, l'acide polyacrylique et/ou un de ses sels de poids moléculaire compris entre 500 et 15000, et l'acide polyaspartique et/ou un de ses sels.

8. Procédé selon la revendication 7, **caractérisé en ce que**, lorsque le contrôleur de cristallisation est de l'acide citrique, la carbonatation du lait de chaux se fait à une température variant de 5 à 8°C.

9. Procédé selon la revendication 7, **caractérisé en ce que** le contrôleur de cristallisation est de l'acide polyacrylique et/ou un de ses sels.

10. Procédé selon la revendication 9, **caractérisé en ce que** la carbonatation du lait de chaux se fait à une température supérieure à 10°C et inférieure à 25°C.

11. Procédé selon l'une quelconque des revendications 9 ou 10, **caractérisé en ce que** la concentration en acide polyacrylique et/ou un de ses sels est supérieure à 1 % et en deçà de 20 %, de préférence en deçà de 10 %.

12. Procédé selon la revendication 7, **caractérisé en ce que** le contrôleur de cristallisation est l'acide polyaspartique et/ou un de ses sels.

13. Procédé selon la revendication 12, **caractérisé en ce que** la carbonatation du lait de chaux se fait à une température de début de carbonatation supérieure à 10°C et préférentiellement de maximum 20°C.

14. Procédé selon l'une quelconque des revendications 12 ou13, **caractérisé en ce que** la concentration en acide polyaspartique et/ou un de ses sels est supérieure à 1 % et en deçà de 20 %, de préférence de 2 à 5 %.

15. Procédé selon revendication 7, **caractérisé en ce que** l'acide citrique est partiellement estérifié ou se présente sous la forme de citrate ou de phosphocitrate, ou que l'acide polyacrylique se présente sous la forme de sel, ou que l'acide polyaspartique se présente sous forme de sel.

16. Utilisation de particules de carbonate de calcium précipité conformes à l'une quelconque des revendications 1 à 6 comme charge dans de la matière plastique.

## Patentansprüche

1. Im Nanomaßstab strukturierte Teilchen von gefälltem Calciumcarbonat, **dadurch gekennzeichnet, dass** die Teilchen aus in Form von Bündeln kombinierten Nanofasern bestehen.

2. Teilchen nach Anspruch 1, **dadurch gekennzeichnet, dass** mindestens eine der Nanofasern vom Nanoketten-Typ ist.

3. Teilchen nach einem der Ansprüche 1 und 2, **dadurch gekennzeichnet, dass** die Bündel aus Nanofasern mit einem L/d-Verhältnis von mehr als 5 bestehen.

4. Teilchen nach einem der Ansprüche 1 bis 3, **dadurch gekennzeichnet, dass** die Bündel aus mehr als 100 ähnlichen Nanofasern bestehen.

5. Teilchen nach einem der Ansprüche 1 bis 4, **dadurch gekennzeichnet, dass** die Bündel einen Durchmesser von mehr als 50 nm, vorzugsweise zwischen 100 und 500 nm, aufweisen.

6. Teilchen nach einem der Ansprüche 1 bis 5, **dadurch gekennzeichnet, dass** die Bündel eine Länge zwischen 500 und 1500 nm aufweisen.

7. Verfahren zum Erhalt von Calciumcarbonatteilchen nach einem der Ansprüche 1 bis 6 durch Carbonatisierung von Kalkmilch bei einer Temperatur von höchstens 30°C, **dadurch gekennzeichnet, dass** die Carbonatisierung in Gegenwart eines Kristallisationsreglers, der aus Citronensäure in einer Konzentration zwischen 5 und 15% und/oder einem ihrer Salze, Polyacrylsäure und/oder einem ihrer Salze mit einem Molekulargewicht zwischen 500 und 15.000 und Polyasparaginsäure und/oder einem ihrer Salze ausgewählt wird, durchgeführt wird.

8. Verfahren nach Anspruch 7, **dadurch gekennzeichnet, dass** dann, wenn es sich bei dem Kristallisationsregler um Citronensäure handelt, die Carbonatisierung von Kalkmilch bei einer Temperatur von 5 bis 8°C erfolgt.

9. Verfahren nach Anspruch 7, **dadurch gekennzeichnet, dass** es sich bei dem Kristallisationsregler um Polyacrylsäure und/oder eines ihrer Salze handelt.

10. Verfahren nach Anspruch 9, **dadurch gekennzeichnet, dass** die Carbonatisierung der Kalkmilch bei einer Temperatur von mehr als 10°C und weniger als 25°C erfolgt.

11. Verfahren nach einem der Ansprüche 9 und 10, **dadurch gekennzeichnet, dass** die Konzentration von Polyacrylsäure und/oder einem ihrer Salze über 1% und unter 20%, vorzugsweise unter 10%, liegt.

12. Verfahren nach Anspruch 7, **dadurch gekennzeichnet, dass** es sich bei dem Kristallisationsregler um Polyasparaginsäure und/oder eines ihrer Salze handelt.

13. Verfahren nach Anspruch 12, **dadurch gekennzeichnet, dass** die Carbonatisierung der Kalkmilch bei einer Carbonatisierungsanfangstemperatur von mehr als 10°C und vorzugsweise höchstens 20°C erfolgt.

14. Verfahren nach einem der Ansprüche 12 und 13, **dadurch gekennzeichnet, dass** die Konzentration von Polyasparaginsäure und/oder einem ihrer Salze über 1% und unter 20%, vorzugsweise bei 2 bis 5%, liegt.

15. Verfahren nach Anspruch 7, **dadurch gekennzeichnet, dass** die Citronensäure teilweise verestert ist oder in Form von Citrat oder Phosphocitrat vorliegt oder dass die Polyacrylsäure in Salzform vorliegt oder dass die Polyasparaginsäure in Salzform vorliegt.

16. Verwendung von Teilchen von gefälltem Calciumcarbonat gemäß einem der Ansprüche 1 bis 6 als Füller in Kunststoff.

## Claims

1. Precipitated calcium carbonate particles structured at the nanoscale, **characterized in that** the particles are composed of nanofibres combined as faggots.

2. Particles according to Claim 1, **characterized in that** at least one of the nanofibres is of the nanorosary type.

3. Particles according to either one of Claims 1 and 2, **characterized in that** the faggots are composed of nanofibres having an L/d ratio of greater than 5.

4. Particles according to any one of Claims 1 to 3, **characterized in that** the faggots are composed of more than 100 similar nanofibres.

5. Particles according to any one of Claims 1 to 4, **characterized in that** the faggots have a diameter of greater than 50 nm, preferably between 100 and 500 nm.

6. Particles according to any one of Claims 1 to 5, **characterized in that** the faggots have a length of between 500 and 1500 nm.

7. Process for the production of calcium carbonate particles according to any one of Claims 1 to 6, by carbonation of milk of lime at a temperature not exceeding 30°C, **characterized in that** the carbonation is carried out in the presence of a crystallization controller selected from citric acid in a concentration of between 5 and 15%, and/or one of its salts, polyacrylic acid and/or one of its salts with a molecular weight of between 500 and 15 000, and polyaspartic acid and/or one of its salts.

8. Process according to Claim 7, **characterized in that**, when the crystallization controller is citric acid, the carbonation of the milk of lime takes place at a temperature varying from 5 to 8°C.

9. Process according to Claim 7, **characterized in that** the crystallization controller is polyacrylic acid and/or one of its salts.

10. Process according to Claim 9, **characterized in that** the carbonation of the milk of lime takes place at a temperature of greater than 10°C and less than 25°C.

11. Process according to either one of Claims 9 and 10, **characterized in that** the concentration of polyacrylic acid and/or one of its salts is greater than 1% and below 20%, preferably below 10%.

12. Process according to Claim 7, **characterized in that** the crystallization controller is polyaspartic acid and/or one of its salts.

13. Process according to Claim 12, **characterized in that** the carbonation of the milk of lime takes place at a temperature at the beginning of carbonation of greater than 10°C and preferably at most 20°C.

14. Process according to either one of Claims 12 and 13, **characterized in that** the concentration of polyaspartic acid and/or one of its salts is greater than 1% and below 20%, preferably from 2 to 5%.

15. Process according to Claim 7, **characterized in that** the citric acid is partially esterified or provided in a citrate or phosphocitrate form, or that the polyacrylic acid is provided in the salt form, or that the polyaspartic acid is provided in the salt form.

16. Use of precipitated calcium carbonate particles in accordance with any one of Claims 1 to 6 as filler in plastic.
